(19) Europäisches Patentamt
European Patent Office
Office européen des brevets

(11) **EP 2 188 590 B1**

(12) **FASCICULE DE BREVET EUROPEEN**

(45) Date de publication et mention
de la délivrance du brevet:
**12.02.2014 Bulletin 2014/07**

(51) Int Cl.:
**G01C 3/04** *(2006.01)* **G01S 17/02** *(2006.01)*
**F41G 3/02** *(2006.01)* **F41G 3/06** *(2006.01)*

(21) Numéro de dépôt: **08803282.6**

(22) Date de dépôt: **27.08.2008**

(86) Numéro de dépôt international:
**PCT/EP2008/061256**

(87) Numéro de publication internationale:
**WO 2009/033956 (19.03.2009 Gazette 2009/12)**

(54) **Procédé et dispositif de télémétrie sur image stabilisée**

Verfahren und Vorrichtung zur Abstandsmessung gestützt auf ein stabilisiertes Bild

Stabilized-image telemetry method and device

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **14.09.2007 FR 0706464**

(43) Date de publication de la demande:
**26.05.2010 Bulletin 2010/21**

(73) Titulaire: **THALES**
**92200 Neuilly-sur-Seine (FR)**

(72) Inventeurs:
• **PERRUCHOT, Ludovic**
**F-78830 Bonnelles (FR)**

• **RABAULT, Denis**
**F-92100 Boulogne-Billancourt (FR)**
• **SEUGNET, Patrick**
**F-92320 Chatillon (FR)**
• **COCLE, Olivier**
**F-92330 Sceaux (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(56) Documents cités:
US-A- 6 069 656     US-A1- 2006 201 047
US-A1- 2007 014 003

EP 2 188 590 B1

## Description

Le domaine de l'invention est celui des jumelles équipées d'un télémètre laser. On désigne par jumelle un dispositif d'imagerie portable destiné à être tenu à la main.

On va décrire une telle jumelle.

Elle comprend de manière classique, une voie d'observation qui comprend un capteur d'images et une voie de télémétrie laser dite voie laser ; elle comprend également un écran d'affichage commun aux deux voies sur lequel apparaît l'image issue du capteur d'image et sur lequel sont positionnés un réticule de tir matérialisant l'axe de visée du télémètre laser et un réticule matérialisant le centre du capteur d'image. Ces réticules ont généralement la forme d'une croix. Le faisceau laser du télémètre est émis dans un secteur très étroit typiquement d'environ 1 mrad, ce qui impose un pointage très précis du laser. Une harmonisation c'est-à-dire un alignement des axes entre la voie laser et la voie d'observation est effectuée en usine. Pour télémétrer la cible, l'opérateur oriente la jumelle de manière à positionner le réticule laser sur la cible puis le tir est effectué par action sur un bouton poussoir.

Il est connu d'équiper une telle jumelle d'un dispositif de stabilisation de l'image qui permet de compenser les mouvements perturbateurs de l'opérateur qui tient la jumelle avec ses mains. Cette stabilisation permet de maintenir constant l'axe de visée de la voie observation en dépit de petits mouvements de la jumelle ; ces mouvements perturbateurs de l'opérateur sont limités aux basses fréquences avec une fréquence de coupure haute d'environ 2 Hz. Mais la stabilisation ne doit pas empêcher de suivre les mouvements de l'opérateur qui ne sont pas des écarts de stabilisation mais des déplacements volontaires de la jumelle par l'opérateur tel qu'un mouvement de déplacement panoramique lors par exemple de la recherche d'une zone d'intérêt. Pour cela l'image est recentrée en permanence à très basse fréquence. En effet, les mouvements erratiques de l'observateur correspondent à des déplacements de la jumelle de faibles amplitudes et de hautes fréquences temporelles alors que les mouvements volontaires correspondent aux déplacements de grandes amplitudes et de basses fréquences.

Un exemple de jumelle équipée d'un télémètre et d'un dispositif de stabilisation est décrit dans le document US 6 069 656. Cette jumelle comprend un capteur d'images, un dispositif de visualisation avec un écran d'affichage, un laser apte à être matérialisé sur l'écran d'affichage par un symbole et un dispositif de stabilisation sur l'écran d'affichage des images issues du capteur. Des moyens de calcul estiment la distance entre une position prédéterminée au sol et la ligne de visée du capteur.

Par cette stabilisation, on obtient donc une image stable mais en conséquence, l'axe laser dans cette image est mouvant, et il est humainement difficile de pointer la cible sans bouger assez longtemps pour effectuer le tir de télémétrie ; la procédure de tir précédente ne fonctionne plus.

Une solution consiste à supprimer la stabilisation pendant la phase de télémétrie.

Une autre solution consiste à stabiliser la jumelle elle-même comme sur des équipements plus volumineux tels que des tourelles optroniques stabilisées ; ces équipements utilisent des dispositifs mécaniques qui stabilisent en même temps les axes de la voie imagerie et de la voie du télémètre laser.

Le but de l'invention est d'éviter d'avoir à supprimer la stabilisation ou d'avoir recours à un équipement stabilisé de manière à conserver l'avantage de l'équipement portable.

L'invention concerne un procédé de télémétrie d'une cible effectuée par un opérateur au moyen d'une jumelle qui comprend un capteur d'image, un écran d'affichage, une unité de traitement et un télémètre laser présentant une fenêtre de tir centrée sur l'axe de visée du laser. Il est principalement caractérisé en ce qu'il comprend les étapes suivantes de :

- saisie par le capteur d'image d'une image dite réelle incluant l'image de la cible à télémétrer et affichage sur l'écran d'une image stabilisée correspondante,
- calcul par l'unité de traitement du décalage $\Delta S$ entre l'image réelle et l'image stabilisée, et du décalage $d = \Delta S + \Delta_h$, $\Delta_h$ étant un décalage d'harmonisation prédéterminé,
- positionnement de l'image stabilisée de la cible sur une position P prédéterminée de l'écran d'affichage,
- ordre de tir par l'opérateur,
- affichage sur l'écran d'affichage d'un élément représentatif de la fenêtre de tir du télémètre,
- déplacement par l'opérateur de la jumelle de cette fenêtre de tir vers la position P de l'écran, à une vitesse de déplacement supérieure à une vitesse vs prédéterminée,
- déclenchement du tir laser par l'unité de traitement dès que d < Do, $D_0$ étant prédéterminé.

Selon un premier mode d'exploitation du procédé, la position P par exemple au centre de l'écran d'affichage est déterminée lors de la fabrication du dispositif, et il comprend une étape de positionnement de l'image stabilisée de la cible sur ladite position par l'opérateur par déplacement de la jumelle. Ensuite, l'opérateur déplace la fenêtre du télémètre vers la position P de l'écran, toujours par déplacement de la jumelle. L'image de la cible stabilisée ne bouge quasiment pas pendant ce déplacement car la vitesse vs de recentrage de l'image stabilisée en P est très inférieure à celle de ce déplacement du réticule de tir : le recalage de stabilisation a en effet une forte inertie par rapport au déplacement du réticule par l'opérateur. Selon un autre mode d'exploitation, la position P est déterminée par détection et identification automatique de la cible par un dispositif de traitement d'image.

Un retard existe entre l'ordre de tir et le déclenchement effectif du tir laser qui implique un décalage de l'axe de tir effectif. Selon une caractéristique de l'invention, on peut ajouter une étape de filtrage prédictif pour compenser ce retard en anticipant l'ordre de tir.

Le capteur d'image est par exemple un capteur fonctionnant dans la bande spectrale visible ou dans les bandes infrarouge.

L'invention a aussi pour objet une jumelle qui comprend un capteur d'images, un dispositif de visualisation avec un écran d'affichage, un télémètre laser apte à être matérialisé sur l'écran d'affichage par un réticule, un dispositif de stabilisation sur l'écran des images issues du capteur, caractérisé en ce qu'il comprend des moyens de calcul de la distance d entre la position du réticule et la position d'un élément prédéterminé de l'image stabilisée et, reliés à ces moyens de calcul de d, des moyens de déclenchement automatique du télémètre dès que cette distance d est inférieure à une distance $D_0$ prédéterminée.

D'autres caractéristiques et avantages de l'invention apparaîtront à la lecture de la description détaillée qui suit, faite à titre d'exemple non limitatif et en référence aux dessins annexés dans lesquels :

les figures 1 illustrent schématiquement l'image d'une cible enregistrée par le capteur d'image et l'affichage sur l'écran d'affichage de l'image stabilisée correspondante,

les figures 2 illustrent schématiquement différentes étapes du procédé selon l'invention,

la figure 3 représente schématiquement des éléments d'une jumelle selon l'invention.

D'une figure à l'autre, les mêmes éléments sont repérés par les mêmes références.

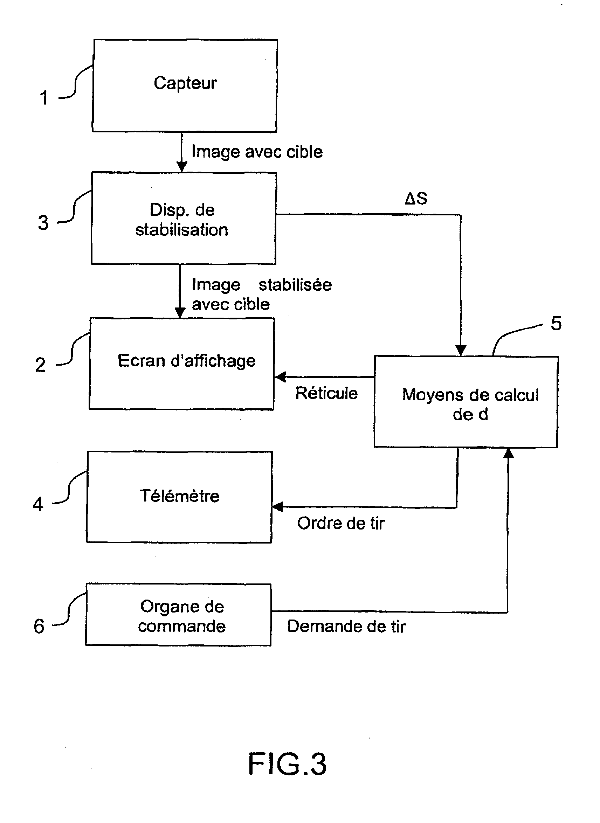

Une jumelle dont certains éléments sont représentés figure 3 comprend de manière classique :

- un capteur d'image 1,
- un télémètre laser 4,
- un dispositif de stabilisation 3 qui peut comporter seulement une traitement numérique de l'image ou utiliser un moyen de mesure angulaire comme un gyromètre ou un gyroscope qui délivre les rotations ou les vitesses de rotation de la jumelle à une unité de traitement apte à calculer à partir de ces vitesses de rotation, les écarts de stabilisation à compenser,
- un dispositif de visualisation avec un écran d'affichage 2 comportant des pixels, sur lequel sont affichées les images stabilisées issues de l'unité de traitement ainsi que les réticules représentatifs du centre du champ observé et de l'axe de visée du télémètre.

Une jumelle, de manière générale crée une représentation angulaire du champ observé. Les mouvements perturbateurs des mains sont alors principalement des mouvements de rotation ; les translations sont négligeables lors de l'observation d'objets lointains.

Pour détecter les mouvements de rotation de la jumelle, on utilise un gyroscope ou un gyromètre solidaire de la jumelle, qui fournit directement ou avec des calculs complémentaires une rotation ou une vitesse de rotation. L'image de la jumelle comportant des pixels répartis en lignes (axe x) et colonnes (axe y), il y a de préférence un gyroscope à deux axes, l'un pour les lignes de pixels, l'autre pour les colonnes. Ce gyroscope qui peut être de différentes technologies, est typiquement un dispositif de technologie MEMS, acronyme de l'expression anglo-saxonne « Micro Electro Mechanical System » pour des micro structures réalisé sur silicium. Les données issues du gyromètre sont filtrées par un filtre passe haut de manière à ce que la stabilisation n'interfère pas avec les mouvements volontaires de l'opérateur par exemple lorsqu'il balaie intentionnellement une zone. Ces images basses fréquence sont utilisées pour déterminer par exemple par une méthode de flot optique, les translations et rotations à appliquer aux images pour les stabiliser. Puis l'image est décalée sur l'écran d'affichage d'un certain nombre de pixels, le décalage étant calculé par l'unité de traitement logiciel en fonction des données du gyroscope filtrées.

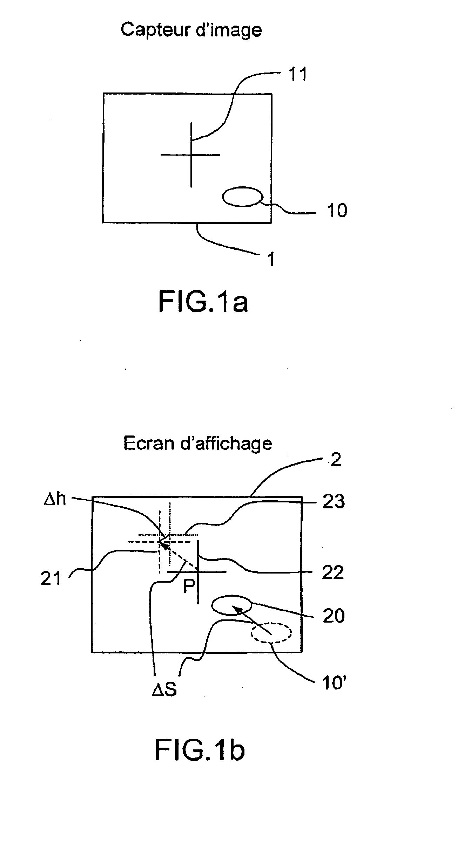

On rappelle le principe de la stabilisation électronique d'image en relation avec les figures 1. La figure 1a représente le capteur d'image 1 sur lequel sont indiqués l'image réelle de la cible 10 à un instant t et le réticule 11 du centre du capteur d'image. La figure 1b représente l'écran d'affichage 2 du dispositif de visualisation sur lequel sont indiqués l'image stabilisée 20 de la cible au même instant t et le réticule 22 du centre de l'écran d'affichage 2, ainsi que le décalage $\Delta S$ entre les images réelle 10' et stabilisée 20 de la cible auquel correspond le décalage entre les réticules du capteur d'image 21 et de l'écran d'affichage 22.

Comme on connaît $\Delta S + \Delta_h$, on peut matérialiser l'axe laser sur l'écran d'affichage 2 ; il est décalé de $\Delta_h$ du réticule du capteur d'image, $\Delta_h$ étant le décalage d'harmonisation prédéterminé, soit de $\Delta S + \Delta_h$ par rapport au réticule du centre de l'écran d'affichage 2. Mais connaître $\Delta S + \Delta_h$ ne permet pas de déclencher le tir car le système ne connaît pas la position de la cible : il faut désigner la cible.

Une première méthode consiste à ce que l'opérateur déplace le réticule laser sur la cible stabilisée qui est sur l'écran du dispositif de visualisation, et à arrêter la stabilisation pendant le tir laser, mais cette méthode n'est pas facile avec une jumelle tenue avec les mains.

Selon l'invention, la désignation de la cible comprend les deux étapes consistant à positionner la cible sur le centre P de l'écran du dispositif de visualisation, puis à positionner sur ce centre l'axe de tir laser matérialisé par son réticule ; de manière plus générale, on peut choisir pour P une autre position que le centre de l'écran du moment que la distance d est calculée par rapport à cette position. La solution de l'invention est ba-

EP 2 188 590 B1

sée sur un tir automatique, le système prenant le relais de l'opérateur dès lors que celui-ci a ordonné le tir ; l'image stabilisée de la cible est désignée au système par l'opérateur qui centre cette image stabilisée sur une position P, matérialisée par exemple par le réticule 22 de l'écran d'affichage 2, et ordonne le tir dès que le centrage est obtenu. Le positionnement de la cible sur P est assez stable car réalisé à une fréquence très basse largement inférieure au Hertz et bien inférieure à la fréquence de déstabilisation, qui est proche de 0.5 Hz. La fréquence de déstabilisation est celle des mouvements perturbateurs de l'opérateur. Après la désignation, on sait matérialiser l'axe laser avec les limites du faisceau et démarrer la procédure de recentrage, et tir automatique.

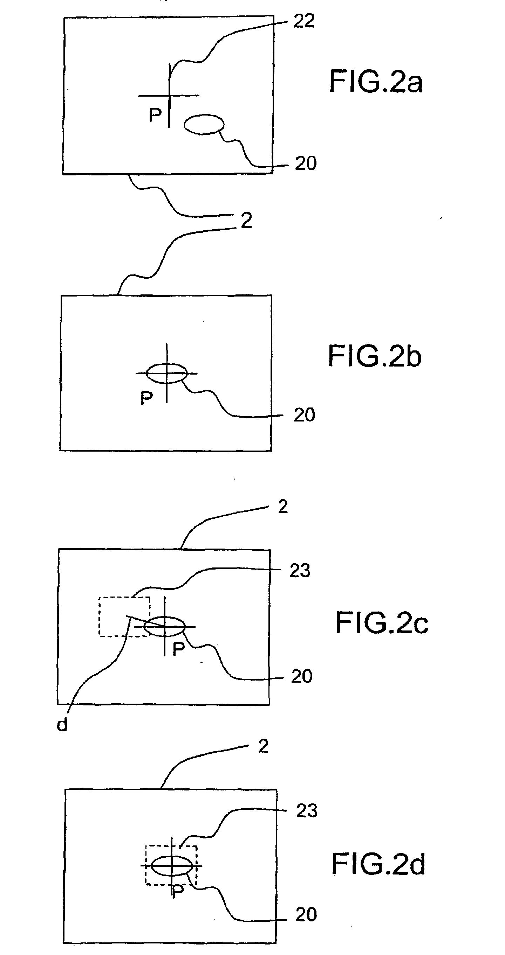

Le procédé selon l'invention comprend les étapes suivantes décrites en relation avec les figures 2 :

-    affichage sur l'écran 2 d'une image stabilisée 20 qui inclut l'image de la cible à télémétrer (figure 2a),
-    centrage de l'image stabilisée 20 de la cible vers la position P, ici le centre de l'écran d'affichage, par déplacement de la jumelle par l'opérateur (figure 2b),
-    dès que l'image stabilisée 20 est bien positionnée en P, l'opérateur peut ordonner le tir par exemple par action sur un bouton poussoir, ce qui peut induire de plus un blocage du recalage du dispositif de stabilisation dans le but de maintenir l'image fixe, le temps de la séquence,
-    calcul par l'unité de traitement du décalage d = ΔS + $\Delta_h$, $\Delta_h$ étant un décalage d'harmonisation prédéterminé,
-    affichage sur l'écran 2 de l'axe de visée du laser et de sa divergence sous forme d'une fenêtre 23 (un rectangle ou un cercle par exemple) matérialisant le cône d'illumination (figure 2c) ; c'est la fenêtre de tir que l'opérateur doit placer sur la position P, sachant que cette fenêtre n'est pas stabilisée mais suit les mouvements perturbateurs de l'opérateur ; cette fenêtre est située à une distance d de la position P, cette distance étant égale au décalage de stabilisation d calculé précédemment,
-    déplacement de cette fenêtre 23 vers la position P de l'écran par déplacement de la jumelle par l'opérateur, tout en maintenant l'image stabilisée 20 de la cible sur la position P de l'écran 2, (figure 2d)
-    déclenchement du tir laser par l'unité de traitement dès que d < Do, $D_0$ étant prédéterminé.

La translation de la fenêtre de tir 23 vers la position P (ici le centre) de l'écran est effectuée par l'opérateur. Au cours de cette translation, la fenêtre 23 passe sur le centre P de l'écran, voire le dépasse avec une probabilité très forte. L'opérateur ne peut pas maintenir la position où la cible et la fenêtre de tir coïncident, suffisamment longtemps pour déclencher le tir laser, à cause des mouvements perturbateurs de la main : cette translation vers le centre de l'écran ne peut être qu'approximative. C'est pourquoi l'unité de traitement prend le relais pendant cette étape et déclenche elle-même le tir quand l'écart est estimé suffisamment faible c'est-à-dire dès qu'elle obtient d < $D_0$, $D_0$ étant prédéterminé.
Selon un autre mode de réalisation, la position P de la cible sur l'écran 2 est obtenue par détection et identification automatiques de la cible réalisées par une unité de traitement d'image qui matérialise son choix par un positionnement de P ; le tir laser est déclenché comme précédemment dès que la distance d entre la fenêtre de tir et cette position P repérée est inférieure à $D_0$. Comme précédemment, l'opérateur cherche à faire coïncider le réticule laser 23 avec la position P, qui dans le cas présent n'est plus obligatoirement au centre de l'écran.
Pour aider le dispositif de détection, en cas de présence de plusieurs cibles potentielles, on peut coupler une phase de centrage avec une détection automatique.
Une étape supplémentaire peut être ajoutée qui consiste à prendre en compte l'éventuel retard entre l'ordre de tir de l'opérateur et l'émission laser : on introduit un filtre prédictif pour compenser ce retard en anticipant l'ordre de tir.
On utilise les données suivantes :

-    Temps t1 entre l'acquisition de l'image et l'élaboration des écarts de stabilisation : ce temps comporte les retards de lecture du capteur d'image, les temps de transferts des informations, les retards dus aux synchronisations des différentes tâches, le temps de calcul des écarts de stabilisation et le temps de retard des différents filtres.
-    Temps t2 entre l'élaboration des écarts de stabilisation et une demande de tir.
-    Temps t3 entre une demande de tir par l'opérateur et un ordre de tir vers le télémètre.
-    Temps t4 que va mettre le laser entre un ordre de tir et un tir effectif.
-    Vitesse vs des décalages de stabilisation (la vitesse est élaborée à partir des décalages de stabilisation et du temps entre deux acquisitions).

Le décalage « dec » de la position de la cible lors du tir effectif est prédite par :

$$dec = vs/(t1+t2+t3+t4)$$

Le décalage est additionné à l'écart de stabilisation ΔS utilisé pour calculer d.
Une jumelle selon l'invention, décrite en relation avec la figure 3 comprend :

-    un capteur d'image 1,
-    un dispositif de stabilisation 3 qui comporte un gyroscope et une unité de traitement,
-    un dispositif de visualisation qui comporte un écran de visualisation 2,
-    un télémètre 4 et des moyens 5 de calcul de d et de déclenchement du tir laser,

- un organe de commande 6, comme un bouton poussoir de demande de tir.

Le capteur d'images 1 fournit les images captées dites réelles au dispositif de stabilisation 3 qui les stabilise et les transmet au dispositif de visualisation pour affichage sous forme stabilisée ; l'image stabilisée incluant la cible est ainsi affichée sur l'écran de visualisation 2. Le télémètre 4 est relié au dispositif de visualisation de manière à ce que lorsque l'opérateur a sélectionné le mode télémétrie, le réticule du télémètre soit affiché sur l'écran de visualisation 2 et déplacé par l'opérateur. Le dispositif de visualisation, le télémètre 4 et le dispositif de stabilisation 3 sont reliés aux moyens 5 de calcul de la distance d. Le calcul de d est éventuellement assuré par l'unité de traitement de la stabilisation.

## Revendications

1. Procédé de télémétrie d'une cible effectuée par un opérateur au moyen d'une jumelle qui comprend un capteur d'image (1), un écran d'affichage (2), une unité de traitement et un télémètre laser (4) présentant une fenêtre de tir centrée sur l'axe de visée du laser, **caractérisé en ce qu'**il comprend les étapes suivantes de :

   - saisie par le capteur d'image (1) d'une image (10) dite réelle incluant l'image de la cible à télémétrer et affichage sur l'écran (2) d'une image stabilisée (20) correspondante,
   - calcul par l'unité de traitement du décalage $\Delta S$ entre l'image réelle (10) et l'image stabilisée (20),
   - positionnement de l'image stabilisée (20) sur une position prédéterminée P de l'écran d'affichage,
   - ordre de tir par l'opérateur,
   - calcul du décalage d = $\Delta S + \Delta_h$, $\Delta_h$ étant un décalage d'harmonisation prédéterminé,
   - affichage sur l'écran d'affichage d'un élément (23) représentatif de la fenêtre de tir du télémètre,
   - déplacement de cet élément (23) représentatif de la fenêtre de tir vers la position P de l'écran, à une vitesse de déplacement inférieure à une vitesse prédéterminée, et pendant ce déplacement, calcul du décalage d = $\Delta S + \Delta_h$, $\Delta_h$ étant un décalage d'harmonisation prédéterminé,
   - déclenchement du tir laser par l'unité de traitement dès que d < $D_0$, $D_0$ étant prédéterminé.

2. Procédé selon la revendication précédente, **caractérisé en ce que** l'image stabilisée (20) est positionnée sur la position P par l'opérateur.

3. Procédé selon l'une des revendications précédentes, **caractérisé en ce que** la position P est située sensiblement au centre de l'écran d'affichage (2).

4. Procédé selon la revendication 1, **caractérisé en ce que** la position P est déterminée par détection et identification de la cible.

5. Procédé selon l'une des revendications précédentes, **caractérisé en ce qu'**un retard existant entre l'ordre de tir et le déclenchement du tir laser, il comprend une étape de filtrage prédictif pour compenser ce retard en anticipant l'ordre de tir.

6. Procédé selon l'une des revendications précédentes, **caractérisé en ce que** le capteur d'image est un capteur fonctionnant dans la bande spectrale visible ou dans les bandes infrarouges.

7. Jumelle qui comprend un capteur d'images (1), un dispositif de visualisation avec un écran d'affichage (2), un télémètre laser (4) apte à être matérialisé sur l'écran d'affichage par un réticule (23), un dispositif (3) de stabilisation sur l'écran d'affichage des images issues du capteur, **caractérisée en ce qu'**il comprend des moyens (5) de calcul de la distance d entre la position du réticule (23) et une position P prédéterminée et, reliés à ces moyens de calcul de d, des moyens (6) de déclenchement du télémètre dès que cette distance d est inférieure à une distance $D_0$ prédéterminée.

8. Jumelle selon la revendication précédente, **caractérisée en ce que** le capteur d'image (1) est un capteur fonctionnant dans la bande spectrale visible ou dans les bandes infrarouges.

## Patentansprüche

1. Telemetrieverfahren eines Ziels, das von einem Bediener mit Hilfe eines Fernglases durchgeführt wird, das einen Bildsensor (1), einen Anzeigebildschirm (2), eine Verarbeitungseinheit und einen Lasertelemeter (4) mit einem auf der Zielachse des Lasers zentrierten Schussfenster umfasst, **dadurch gekennzeichnet, dass** es die folgenden Schritte umfasst:

   - Erfassung eines realen Bilds (10) durch den Bildsensor (1) bei Einschluss des Bilds des zu telemetrierenden Ziels und Anzeige eines entsprechenden stabilisierten Bilds (20) auf dem Bildschirm (2),
   - Berechnung des Versatzes $\Delta S$ zwischen dem realen Bild (10) und dem stabilisierten Bild (20) durch die Verarbeitungseinheit,
   - Positionierung des stabilisierten Bilds (20) auf einer vorbestimmten Position P des Anzeigebildschirms,

- Schussbefehl durch den Bediener,
- Berechnung des Versatzes d = $\Delta S + \Delta_h$, wobei $\Delta_h$ ein vorbestimmter Harmonisierungsversatz ist,
- Anzeige eines repräsentativen Elements (23) des Schussfensters des Telemeters auf dem Anzeigebildschirm,
- Verlagerung dieses repräsentativen Elements (23) des Schussfensters mit einer Verlagerungsgeschwindigkeit, die kleiner ist als eine vorbestimmte Geschwindigkeit, in die Position P des Bildschirms , und Berechnung des Versatzes d = $\Delta S + \Delta_h$ während dieser Verlagerung, wobei $\Delta_h$ ein vorbestimmter Harmonisierungsversatz ist,
- Auslösen des Laserschusses durch die Verarbeitungseinheit, sobald d < $D_0$, wobei $D_0$ vorbestimmt ist.

2. Verfahren nach vorangehendem Anspruch, **dadurch gekennzeichnet, dass** das stabilisierte Bild (20) vom Bediener auf die Position P positioniert wird.

3. Verfahren nach einem der vorangehenden Ansprüche, **dadurch gekennzeichnet, dass** sich die Position P etwa im Zentrum des Anzeigebildschirms (2) befindet.

4. Verfahren nach Anspruch 1, **dadurch gekennzeichnet, dass** die Position P durch Detektion und Identifikation des Ziels bestimmt wird.

5. Verfahren nach einem der vorangehenden Ansprüche, **dadurch gekennzeichnet, dass**, da es zwischen dem Schussbefehl und dem Auslösen des Laserschusses eine Verzögerung gibt, es einen Schritt der prognostischen Filterung umfasst, um diese Verzögerung durch Antizipieren des Schussbefehls auszugleichen.

6. Verfahren nach einem der vorangehenden Ansprüche, **dadurch gekennzeichnet, dass** der Bildsensor ein Sensor ist, der im sichtbaren Spektralband oder in den Infrarotbändern arbeitet.

7. Fernglas, das einen Bildsensors (1), eine Visualisierungsvorrichtung mit einem Anzeigebildschirm (2), einen Lasertelemeter (4), der imstande ist, auf dem Anzeigebildschirm durch ein Fadenkreuz (23) materialisiert zu sein, eine Vorrichtung (3) zur Stabilisierung der von dem Sensor ausgegebenen Bilder auf dem Anzeigebildschirm umfasst, **dadurch gekennzeichnet, dass** es Mittel (5) zur Berechnung des Abstands d zwischen der Position des Fadenkreuzes (23) und einer vorbestimmten Position P umfasst und, verbunden mit diesen Mitteln zur Berechnung von d, Mittel (6) zur Auslösung des Telemeters, sobald dieser Abstand d kleiner als ein vorbestimmter Abstand $D_0$ ist.

8. Fernglas nach vorangehendem Anspruch, **dadurch gekennzeichnet, dass** der Bildsensor (1) ein Sensor ist, der im sichtbaren Spektralband oder in den Infrarotbändern arbeitet.

**Claims**

1. A method for the telemetry of a target carried out by an operator by means of binoculars that comprise an image sensor (1), a display screen (2), a processing unit and a laser telemeter (4) having a firing window centred on the axis of sight of said laser, **characterised in that** it comprises the following steps of:

   - capturing an image (10), referred to as real image, by said image sensor (1), said image including the image of the target to be telemetered, and displaying a corresponding stabilised image (20) on said screen (2);
   - calculating, via said processing unit, the shift $\Delta S$ between said real image (10) and said stabilised image (20);
   - positioning said stabilised image (20) on a predetermined position P of said display screen;
   - ordering firing by the operator;
   - calculating the shift d = $\Delta S + \Delta_h$, with $\Delta_h$ being a predetermined harmonisation shift;
   - displaying, on said display screen, an element (23) representing the firing window of said telemeter;
   - displacing said element (23) representing the firing window toward the position P of said screen, at a displacement speed that is below a predetermined speed, and, during this displacement, calculating the shift d = $\Delta S + \Delta_h$, with $\Delta_h$ being a predetermined harmonisation shift;
   - triggering the laser shot via said processing unit as soon as d < $D_0$, with $D_0$ being predetermined.

2. The method according to the preceding claim, **characterised in that** said stabilised image (20) is positioned on the position P by the operator.

3. The method according to any one of the preceding claims, **characterised in that** the position P is located substantially in the centre of said display screen (2).

4. The method according to claim 1, **characterised in that** the position P is determined by detection and identification of the target.

5. The method according to any one of the preceding claims, **characterised in that**, with a delay existing between the firing order and the triggering of the laser shot, it comprises a step of predictive filtering so as to compensate for this delay by anticipating the firing order.

6. The method according to any one of the preceding claims, **characterised in that** said image sensor is a sensor operating in the visible spectral band or in the infrared bands.

7. A pair of binoculars comprising an image sensor (1), a display device with a display screen (2), a laser telemeter (4) designed to be shown on said display screen by a reticle (23), a device (3) for stabilising on said display screen the images coming from said sensor, **characterised in that** it comprises means (5) for calculating the distance d between the position of said reticle (23) and a predetermined position P and, connected to said means for calculating the distance d, means (6) for triggering the telemeter as soon as this distance d is less than a predetermined distance $D_0$.

8. The binoculars according to the preceding claim, **characterised in that** said image sensor (1) is a sensor operating in the visible spectral band or in the infrared bands.

Capteur d'image

## FIG.1a

Ecran d'affichage

## FIG.1b

FIG.2a

FIG.2b

FIG.2c

FIG.2d

```
     ┌─────────────────┐
  1  │     Capteur     │
     └─────────────────┘
              │ Image avec cible
              ▼
     ┌─────────────────┐                    ΔS
  3  │    Disp. de     │─────────────────────────────┐
     │  stabilisation  │                              │
     └─────────────────┘                              │
              │ Image   stabilisée                    │
              ▼ avec cible                            ▼            5
     ┌─────────────────┐                    ┌─────────────────┐
  2  │ Ecran d'affichage│◄───────────────── │ Moyens de calcul│
     └─────────────────┘     Réticule       │      de d       │
                                            └─────────────────┘
     ┌─────────────────┐                      │            ▲
  4  │    Télémètre    │◄─────────────────────┘            │
     └─────────────────┘      Ordre de tir                 │
                                                           │
     ┌─────────────────┐                                   │
  6  │   Organe de     │───────────────────────────────────┘
     │   commande      │     Demande de tir
     └─────────────────┘
```

# FIG.3

**EP 2 188 590 B1**

## RÉFÉRENCES CITÉES DANS LA DESCRIPTION

**Documents brevets cités dans la description**

- US 6069656 A